# EUROPEAN PATENT SPECIFICATION

(11) **EP 2 232 952 B1**
(45) Date of publication and mention of the grant of the patent: **21.08.2013**
(21) Application number: 08859418.9
(22) Date of filing: 10.12.2008
(51) Int. Cl.: H05B 37/02

(54) **ENERGY SAVING DEVICE**
ENERGIESPAREINRICHTUNG
DISPOSITIF D'ÉCONOMIE D'ÉNERGIE

(30) Priority: 13.12.2007 GB 0724326
(43) Date of publication of application: 29.09.2010
(73) Proprietor: Treegreen Limited, North Lanarkshire G67 2BT (GB)
(72) Inventor: O'REILLY, Brian, Glasgow G67 2BT (GB)
(74) Representative: Walker, Stephen
(86) International application number: PCT/GB2008/051174
(87) International publication number: WO 2009/074830

(56) References cited:
- WO-A-96/25021
- DE-A1- 10 008 934
- GB-A- 2 395 842
- US-A- 5 699 243
- US-A1- 2006 125 624

## Description

The present invention relates to a method and device for reducing energy consumption, in particular to a method and device for switching off electrical appliances when a room is vacant.

A large amount of energy is wasted daily in the household, office, factories, vehicles and the like. It has become an urgent necessity in the current world situation of dwindling resources and population expansion that energy is conserved and wastage mitigated.

Conservation means reducing wastage and increasing energy efficiency. Significant energy savings are possible from conservation practices.

Conservation practices include reducing heat and energy loss, using less electricity per person and can, to some degree, be brought about by improving the efficiency of modern appliances and technology.

Using energy efficiently can benefit society in many ways, including:
- Significantly reducing energy costs;
- Improved energy security and greater energy availability, especially in poorer regions of the world;
- Environmental conservation; and
- Reduction in the cost of domestic energy bills.

As the population of the world increases, and the standard of living in countries improves, so to does the per capita usage of energy. Demand for energy is irreversibly increasing in the 21st Century.

In the UK, the domestic sector consumes 28% of all energy generated and is responsible for 27% of UK CO2 emissions (DTI 2002, DEFRA 2002). Energy demand in the sector grew 17.5% from 1990 to 2003 whilst economic growth during the same period amounted to only 7.5%. This in turn is indicated as a significant contributor to climate change.

The opportunity to make deep cuts in energy wastage and carbon emissions by personal intervention is available if a user ensures that appliances are switched off whenever they are not in use or not needed. The Carbon Reduction Project (CRed UK) of the University of East Anglia estimates that leaving appliances on stand by or plugged in when not used costs in excess of £230 million annually, and that the world must cut its carbon emissions by at least 60% by 2025 to avoid the worst of the climate changing effects. Whilst moving towards a situation of energy conservation, it is important that the day to day comfort and convenience of the public is not unduly compromised. An ideal situation for today would be to be able to provide at least the same services and level of convenience but with less energy usage.

There are additional concerns; for example fires which begin because of faulty electrical goods - or misuse of appliances - continue to pose a threat to families across Scotland (and throughout the developed world).

Yet in general, the public is unaware of the potential danger posed by simply by leaving a television on standby, or by putting the washing machine on during the night or when they are out of the house.

Research shows that four out of five Scots believe they are not at risk. However, every week in Scotland, two families suffer fires in their homes due to a faulty appliance which has been left switched on. Statistically, you are more likely to be injured in a house fire in Scotland than you are anywhere else in the UK.

Part of the problem is that an average household has far more electrical goods now than they did 10 years ago, without a corresponding increase in awareness of the potential dangers. Mobile phone chargers, hair straighteners and tumble dryers can all pose a threat in the modern home. Overheating is one of the main causes of fires involving electrical goods, and can be avoided by simply switching off the power supply at the wall socket. Appliances need to be switched off in order to make them safe when they are not in use.

According to government statistics, there were over 47,000 accidental fires in dwellings that were reported to the fire and rescue service in the UK during 2005. Furthermore a recent government survey of houses in England recognises that fires reported to the fire and rescue service represented only about a quarter of all fires that occur in dwellings.

Most of us take electricity for granted; we make use of it daily and forget that it can be dangerous if not treated with respect. Of the reported fires, 17% are caused by electrical faults and a further 26% are caused by the 'misuse of electrical equipment and appliances'. It is therefore important that we all do what we can to reduce the risk of a fire starting in our home due to an electrical problem.

US 2006/125624 describes an occupancy sensor that operates in two modes; a "walk-through" mode with a short timeout and another mode that varies the timeout dependent on the frequency and/or amplitude of detected motion when a person lingers in the room.

In accordance with a first aspect of the present invention, there is provided an energy saving system according to claim 1.

Preferably, the motion sensor is adapted to generate a signal to initiate the predetermined time period responsive to an absence of movement within the predetermined area.

Preferably, the motion sensor is adapted to generate a subsequent signal corresponding to detection of a movement within the predetermined area, said signal constituting at least a part of the means for resetting the system.

Alternatively, the motion sensor is adapted to generate a signal to initiate the predetermined time period responsive to detection of a movement within the predetermined area which exceeds a predetermined threshold. Preferably, the at least one electrical socket assembly is configured to complement plug attachments of a plurality of electrical appliances.

Optionally, the at least one electrical socket assembly is integrated into building structure, e.g. a floor, partition or wall.

Alternatively, the at least one electrical socket assembly is portable.

Preferably the at least one electrical socket assembly is a modified power strip of switched sockets adapted to receive corresponding plugs.

The motion sensor may be contained in a portable device.

Preferably, the portable device comprises a processor adapted to process said at least one signal.

Preferably, the motion sensor is a passive infrared sensor.

Preferably the means of communicating a signal between said motion sensor and said at least one electrical socket assembly is a means of wireless communication, more preferably radio frequency communication device.

This device may be a microchip comprising an integrated circuit for storing and processing information, modulating and demodulating a (RF) signal, and an antenna. Power for the device may be from a stored charge device such as a button cell, coin cell or battery.

Preferably the means to interrupt the supply of electrical current to said at least one electrical socket comprises a solid state relay.

Preferably the means of resetting the system may also be used to interrupt the supply of electrical current to said at least one electrical socket if actuated whilst electrical appliances connected to the system are supplied with electrical current and are in use.

Alternatively the means to interrupt the supply of electrical current to said at least one electrical socket comprises a means of wireless communication, more preferably radio frequency communication device.

This device may be a microchip comprising an integrated circuit for storing and processing information, modulating and demodulating a (RF) signal, and an antenna. Power for the device may be from a stored charge device such as a button cell, coin cell or battery.

Preferably the alert means provides an audible signal.

Optionally, the alert means provides a visual signal.

Preferably the means for interrupting the electrical supply at said at least one electrical socket assembly after a predetermined time period comprises a countdown timing mechanism.

Preferably the countdown timing mechanism is a timing circuit.

Optionally, the system further comprises a webpage configured so as to allow remote interruption of the electrical supply. The system may comprises a TCP/IP stack, and be configured to host the webpage. Alternatively, the webpage may provide a remote signal which initiates the predetermined time period.

Preferably, there is provided a means of manually interrupting the electrical supply at said at least one electrical socket assembly.

The at least one electrical socket assembly may incorporate an indicator such as a warning light to confirm active status when it is receiving a supply of electricity.

In accordance with a second aspect of the present invention, there is provided an energy saving system, comprising:
at least one electrical power supply;
a motion sensor which provides a means for detecting movement in a predetermined area;
a means of communicating a signal between said motion sensor and said at least one electrical power supply;
a means for interrupting the at least one electrical power supply after a predetermined time period initiated by said at least one signal;
an alert means for forewarning of the interruption of the electrical power supply; and
a means of resetting the system to abort said interruption of the electrical power supply before expiry of said predetermined time period.

Preferably, the motion sensor is adapted to generate a signal to initiate the predetermined time period responsive to an absence of movement within the predetermined area.

Preferably, the motion sensor is adapted to generate a subsequent signal corresponding to detection of a movement within the predetermined area, said signal constituting at least a part of the means for resetting the system.

Alternatively, the motion sensor is adapted to generate a signal to initiate the predetermined time period responsive to detection of a movement within the predetermined area which exceeds a predetermined threshold. Preferably, the at least one electrical power supply comprises a mains power supply.

Optionally, the electrical power supply is interrupted at the mains power supply.

Optionally, the electrical power supply is interrupted by deactivating one or more circuit breakers of the mains power supply. The one or more circuit breakers can be selected based on a location in which electrical power is to be interrupted, and may be specific to a particular ring circuit, lighting circuit or other localised power circuit.

Optionally, the at least one electrical power supply is integrated into building structure, e.g. a floor, partition or wall.

Alternatively, the at least one electrical power supply is portable.

Preferably the at least one electrical power supply is a modified power strip of switched sockets adapted to receive corresponding plugs.

The motion sensor may be contained in a portable device.

Preferably, the portable device comprises a processor adapted to process said at least one signal.

Preferably, the motion sensor is a passive infrared sensor.

Preferably the means of communicating a signal between said motion sensor and said at least one electrical power supply is a means of wireless communication, more preferably radio frequency communication device.

This device may be a microchip comprising an integrated circuit for storing and processing information, modulating and demodulating a (RF) signal, and an antenna. Power for the device may be from a stored charge device such as a button cell, coin cell or battery.

Preferably the means to interrupt the electrical power supply comprises a solid state relay.

Preferably the means of resetting the system may also be used to interrupt a supply of electrical current to said at least one electrical power supply if actuated whilst electrical appliances connected to the system are supplied with said electrical current and are in use.

Alternatively the means to interrupt the electrical power supply comprises a means of wireless communication, more preferably radio frequency communication device.

This device may be a microchip comprising an integrated circuit for storing and processing information, modulating and demodulating a (RF) signal, and an antenna. Power for the device may be from a stored charge device such as a button cell, coin cell or battery.

Preferably the alert means provides an audible signal.

Optionally, the alert means provides a visual signal.

Preferably the means for interrupting the electrical power supply after a predetermined time period comprises a countdown timing mechanism.

Preferably the countdown timing mechanism is a timing circuit.

Preferably, there is provided a means of manually interrupting the electrical power supply at said at least one electrical power supply.

In use, a power down event for an appliance may be prevented by taking notice of the signal and simply making a movement to reset the timing mechanism.

The system may be adapted to communicate with a microprocessor or personal computer to enable activity to be monitored and the system thereby controlled, and optionally linked to an alarm system so that if all linked appliances are powered down the system may activate an alarm system. In this way when a premises is vacated, all appliances are powered down, and within a predetermined time period the alarm system for the premises is switched to alert monitoring mode to protect the premises and appliances, but equally inadvertent setting of the alarm in part of the premises that is occupied is preventable by adopting the active alert system provided by the invention.

Alternatively, the system may be functionally integrated into the main or central circuitry of a building, which will thereby become under the control of the user of the system.

The present invention will now be described by way of example only with reference to the accompanying drawings in which:
Figure 1 is a flow diagram of a general application of the invention and a perspective drawing of the invention;
Figure 2 is a block circuit diagram;
Figure 3 is an electrical socket assembly used in the present invention;
Figure 4 is a Passive Infrared Sensor used in the present invention;
Figure 5 is a superheterodyne receiver according to the present invention;
Figure 6 is a block diagram of the two elements of the present invention, a first remote unit and a second power unit according to the present invention;
Figure 7 is a diagram describing two examples of how a chronological sequence of events may occur according to the present invention; and
Figure 8 is a flow chart describing how a chronological sequence of events may occur according to the present invention.

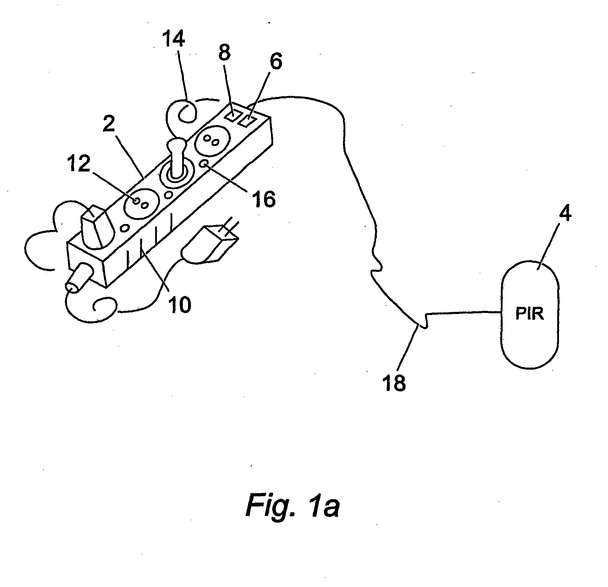

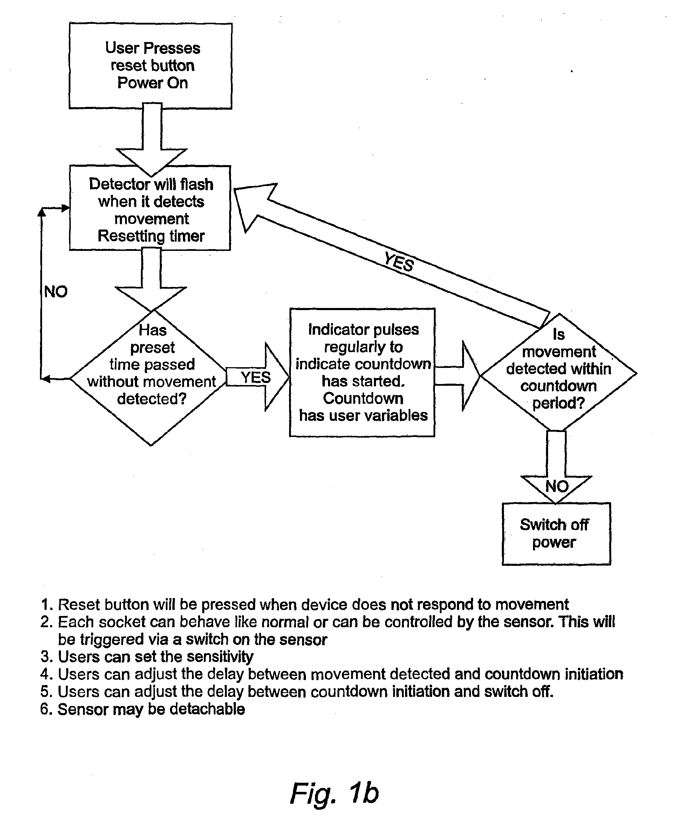

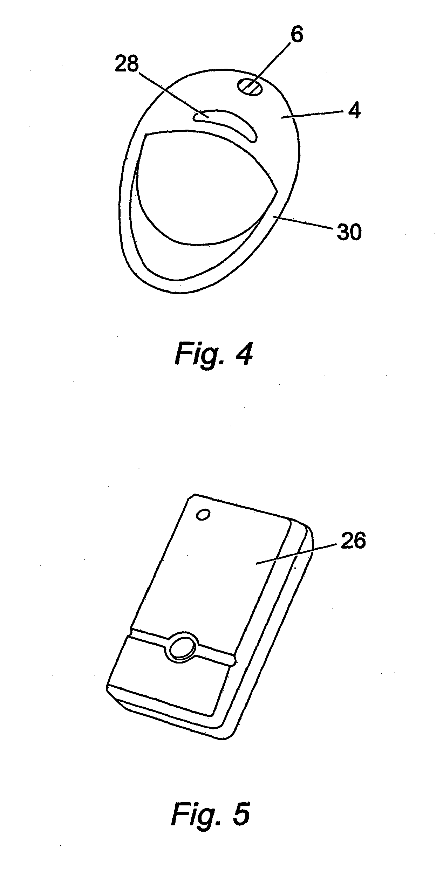

Referring to Figures 1 to 8, a system 1 (which is not an embodiment of the invention, but is useful for understanding the invention) is provided having firstly a remote sensing unit 5 comprising a passive infrared sensor device (PIR) 4, a reset button 6, a timer control knob 8, a buzzer 10, a Radio Frequency Transmit

Module 34 and enough room to house a printed circuit board (PCB) which will contain a CPU 32 and address switches 17, and secondly a power unit 2 comprising a plug socket power strip containing at least four plug sockets 12 and enough room to house a printed circuit board (PCB), a Radio Frequency Receive Module 26 and address switches 16, a solid state relay 24. Said first element 5 is communicatively connected to said second element 2 by a wireless connection 18, preferably using radio frequency communication.

The PIR 4 may alternatively be connected to the plug socket power strip 2 using a wire or a USB connection.

Electricity may be supplied to the PIR 4 by battery or mains socket. When utilised in a room of a typical residential house, the plug socket power strip 2 may be utilised instead of a conventional power strip for providing electrical power to standard electrical appliances which may be connected to the plug socket power strip 2 using plugs 14.

Once the system is connected with electricity supplied, and the remote unit 5 containing the PIR 4 positioned in the room to sweep a target area by selecting a mounting position intended to offer the broadest possible unobstructed view of the contents of the room, the reset button 6 on the remote unit 5 is actuated to reset the system.

The PIR 4 is then able to scan the room for movement. If no movement is detected in a sweep of the target area, the count down timer circuit 20 begins an unoccupied delay countdown in increments. The length of the countdown in seconds or minutes is determined by the timer control knob 8, which preferably is on the remote unit 5 but which may be on the plug socket power strip 2.

When the Unoccupied Delay period 45 reaches the end of a preset time period without movement being detected 56, the Shut Down Delay period 63 starts.

During the Shut Down Delay period 63 the Buzzer 10 will sound 62 and the LED 28 will flash at 0.5Hz intervals. This is to alert any person within hearing range that the electricity supply to the system is about to be interrupted. This sound and or light will allow interested parties to avert the power interruption by producing movement within the scope of the PIR 4.

If movement is detected 58 during the Shut Down Delay period 63, the Shut Down Delay period is aborted, and the process is started again from the start of the Unoccupied Delay period 45, when movement is no longer detected.

When the Shut Down Delay period 63 reaches the end of its preset duration, a signal is sent 76 via. the RF modules 34 housed in the remote unit 5 to the RF modules 26 housed in the Power Unit 2, and the power to the controlled appliances is switched OFF, the Buzzer 10 is silenced 74 and the LED 28 will be off.

After the power to the controlled appliances has been switched OFF, the only way to restore the power is to press the reset switch 6. Following the actuation of the reset switch 6, the system will allow the power to be resupplied to the socket power strip 2, and unit will the start the Unoccupied Delay period 45 when movement is no longer detected.

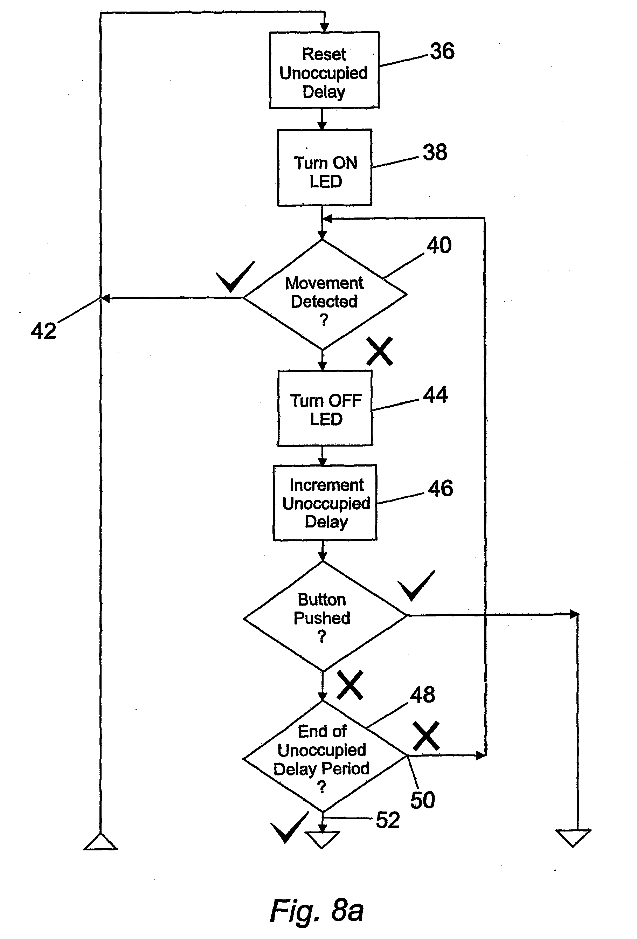

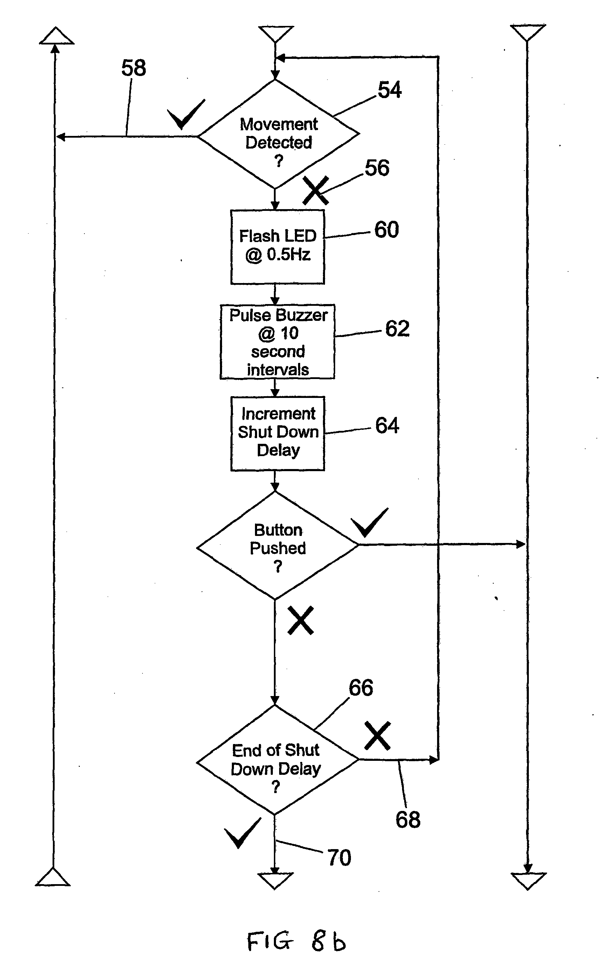

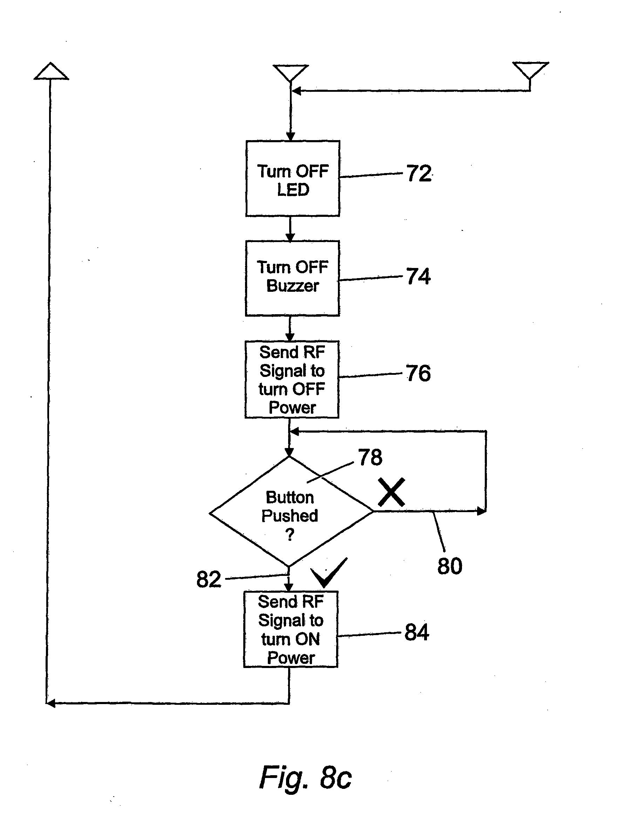

When the PIR 4 detects movement, it may produce a flash of light from an LED 28, to indicate that it has detected movement, and the timer will be reset. A basic flow diagram describing the process flow of the present invention is shown in Figure 8.

If no movement is detected by the PIR 4 during the countdown period, the PIR 4 will send a signal via a radio frequency communication device 26 to the plug socket power strip 2.

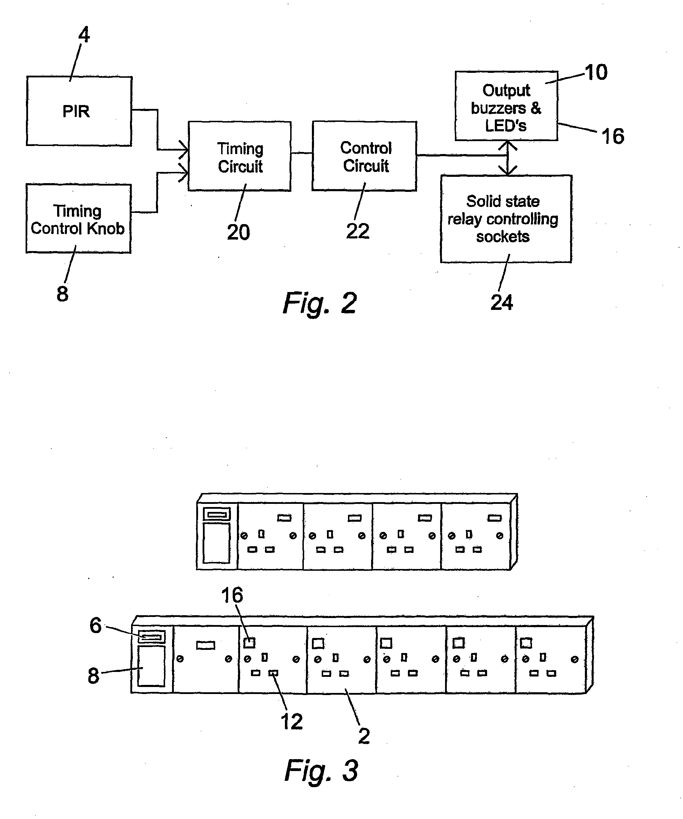

Figure 2 shows a block diagram of this process. The PIR 4 and the timing control knob 8 are linked to a timing circuit 20. When the PIR 4 does not detect movement, the timing circuit 20 will begin to count down from an upper limit of time set by the user using the timing control knob 8.

The control circuit (CPU) 22 will then initiate the signal to the user of the system, consisting of an audio and or visual signal 10. When the timing circuit 20 has completed its countdown before any movement is detected by the PIR 4, the internal CPU 22 sends a signal via means of wireless communication, preferably a radio frequency communication device to the solid state relay 24 in the plug socket power strip 2 to interrupt the power to the sockets 12. In this embodiment, the power can then only be returned to the plug socket power strip 2 by pressing the reset button 6.

If a user enters a room in which the system is located after a period of vacancy, he or she may find that the electricity supply has been interrupted to the plug socket power strip 2, and connected appliances are switched off. The user is then able to re-supply the electricity to the appliances by pressing the reset button 6 to reset the timer and return the electricity supply to the plug socket power strip 2. In an alternative embodiment not shown, the PIR 4 can operate an over-ride switch to restore power supply to the appliances.

In one embodiment, each socket on the plug socket power strip 2 can behave normally, or can be controlled by the remote unit 5. This can be controlled by user actuated switches 16 on the plug socket power strip 2 next to each socket 12. If a socket 12 is controlled by the remote unit 5, the user actuated switches 16 will be lit by an LED.

Alternatively, the user actuated switches may be found on the remote unit 5.

A control interface 30 on the remote unit 5 allows the user to set the functional parameters of the PIR 4 such as its range of view and the delay period between movement detection and countdown initiation.

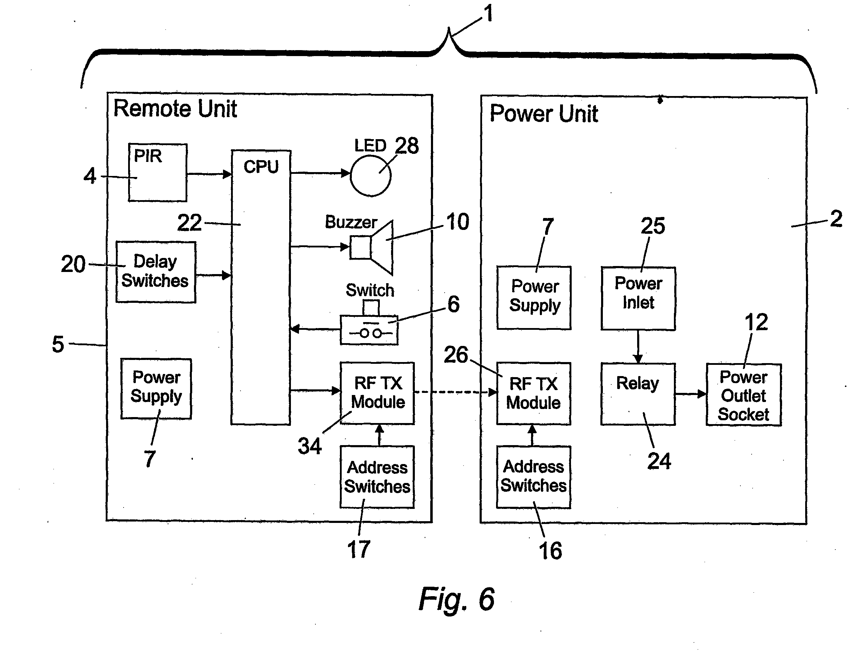

Referring now to Figure 6, a schematic diagram is shown showing the first remote unit 5 element of the invention and the second power unit element 2 of the system 1.

The Remote Unit 5 consists of the following modules as shown in the Block Diagram:

PIR (Passive Infrared) 4: The PIR (Passive Infrared) 4 module detects the presence of human bodies by their movement and Infrared signature. The module gives an output to the CPU 32.

CPU (Central Processing Unit) 32: The CPU (Central Processing Unit) 32 performs the software functions as described in the embodiment below.

LED (Light Emitting Diode) 28: The LED (Light Emitting Diode) 28 provides visual indication, and is controlled by the CPU 32.

Buzzer 10: The Buzzer 10 provides audio indication, and is controlled by the CPU 32.

Reset Switch 6: The reset switch 6 is pressed to restore power to the power outlet socket 12, and thence to the controlled appliances.

Delay Switches 8: The Delay Switches 8 select the duration of the Unoccupied and Shut Down delays.

The Delay Switches 8 will be similar to the Address Switches 16,17 and adjustable by the user.

The Delay switches will be a 4 segment bit switch giving 16 delay options as is shown below in an example binary address chart:

| Segment 1 | Segment 2 | Segment 3 | Segment 4 | UnOccupied Delay (min.) | Shut Down Delay (min.) |
|---|---|---|---|---|---|
| OFF | OFF | OFF | OFF | 3 | 5 |
| ON | OFF | OFF | OFF | 5 | 5 |
| OFF | ON | OFF | OFF | 7 | 5 |
| ON | ON | OFF | OFF | 10 | 5 |
| OFF | OFF | ON | OFF | 15 | 5 |
| ON | OFF | ON | OFF | 3 | 10 |
| OFF | ON | ON | OFF | 5 | 10 |
| ON | ON | ON | OFF | 7 | 10 |
| OFF | OFF | OFF | ON | 10 | 10 |
| ON | OFF | OFF | ON | 15 | 20 |
| OFF | ON | OFF | ON | 10 | 15 |
| ON | ON | OFF | ON | 15 | 15 |
| OFF | OFF | ON | ON | 20 | 15 |
| ON | OFF | ON | ON | 25 | 15 |
| OFF | ON | ON | ON | 30 | 15 |
| ON | ON | ON | ON | 35 | 15 |

The times for unoccupied delay and shut down delay shown above are for example only.

RF TX Module 34: The Radio Frequency Transmit Module 34 is used to send the control signals to the power unit 2.

First Address Switches 17: The address switches 17 select the address of the power units 2 to be controlled. They consist of a house code and a unit code.

All the power modules 2 to be controlled by the control module 32 according to the present invention should have the same unit code, selected from 16 possibilities.

Power Supply 7: The power supply 7 provides DC power for the electronic circuits in the system 1.

The Power Unit 2 consists of the following modules as shown in the Block Diagram.

RF RX Module 26: The Radio Frequency Receive Module 26 detects signals sent by the Remote unit 5.

Second Address Switches 16: The second address switches 16 provide an address for the plug socket 2 according to the present invention. The plug socket 2 will only respond to commands with this address code.

The address codes consist of a house code and a unit code.

All the power modules 2 to be controlled by the control module 32 according to the present invention should have the same unit code, selected from 16 possibilities.

Relay 24: The Relay 24 switches the electrical power from the electrical inlet 25 to the outlet socket 12 when the RF RX module 26 receives a control signal with the correct address.

Power Inlet 25: The Power Inlet 25 connects the domestic electrical supply to the invention system 1.

Power Outlet Socket 12: The Power Outlet Socket 12 provides electrical power to the controlled appliance.

Power Supply 7: The power supply 7 is derived from the Power Inlet 25, and provides DC power for the electronic circuits of the system 1.

Figures 6, 7 and 8, can be used to assist in the description of the system in use. Accordingly, a preferred embodiment of the operation of the invention may be as follows:

The system 1 is connected to a power supply 7, and the reset button 6 actuated 36. The remote unit 5 displays a coloured LED 28 to show that the system is active.

When a user is present in the room the PIR 4 will detect movement and a red LED 28 situated on the remote unit 5 will feedback detected movement to the user 38. The remote unit will continually scan for movement 40 within its field of view.

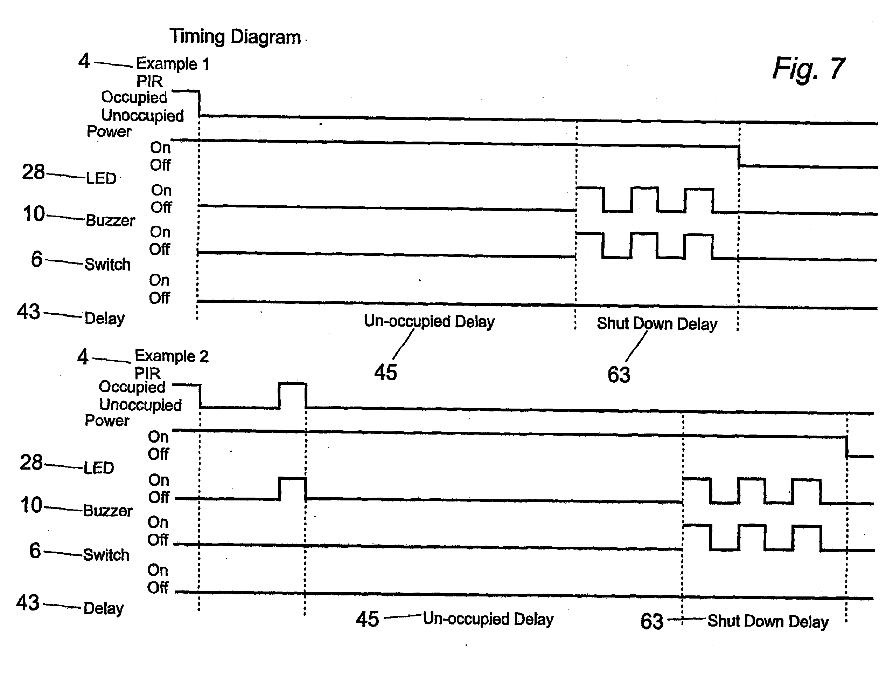

If no movement is detected for a fixed period, shown as the Unoccupied Delay 45 on the Timing Diagram Figure 7, then the Shut Down Delay 63 is started 46. During the Unoccupied Delay 45 the Buzzer 10 is silent and the LED 28 is OFF 44.

If movement is detected 42 during the Unoccupied Delay period 45, the delay is terminated 50, and started again when movement stops. This is shown in Example 2 on the Timing Diagram Figure 7.

When the Unoccupied Delay period 45 reaches the end of a preset time period without movement being detected 56, the Shut Down Delay period 63 starts.

During the Shut Down Delay period 63 the Buzzer 10 will sound 62 and the LED 28 will be ON intermittently 60.

If movement is detected 58 during the Shut Down Delay period 63, the delay is terminated, and the process is started again from the start of the Unoccupied Delay period 45, when movement is no longer detected.

When the Shut Down Delay period 63 reaches the end, a signal is sent 76 via. the RF modules 34 to the Power Unit 2, and the power to the controlled appliances is switched OFF, the Buzzer 10 is silenced 74 and the LED 28 will flash at 0.5Hz intervals.

After the power to the controlled appliances has been switched OFF, the only way to restore the power is to press the reset switch 6. The unit will the start the Unoccupied Delay period 45 when movement is no longer detected.

In a further example of the present invention in use, a situation may be envisaged in which the user of the system is in a room of his house watching television, wherein the television is plugged into the plug socket power strip 2 as defined in this invention. The associated PIR unit, as defined in the present invention, is portable and is positioned in a convenient location in the room (for example on a coffee table next to the user), from where it is able to scan the entire width of the room. Providing the individual watching the television continues to move occasionally in the normal manner, the power to the television will remain on.

However, the individual in the room falls asleep; the PIR 4 is unable to detect movement in the room, and its LED is switched off. The CPU within the remote sensing unit 5 initiates the Unoccupied Delay period 46 which lasts for a preset time period, said preset time period being previously set by the user of the system using the interface provided on the remote unit 5.

When the Unoccupied Delay period has expired, with the occupier of the room still asleep, the Shut Down Delay period will begin as controlled by the CPU in the remote sensing unit. Simultaneously, the LED in the remote unit 5 will begin to flash at 0.5Hz intervals, and the buzzer will sound at 10 second intervals. The Shut Down Delay period is also designed to last for a preset time period set by the user.

The buzzer wakes the occupier of the room before the expiry of the Shut Down Delay period. He then moves in response to the sound, which aborts the shut down of power to the television, turns the LED back on and resets the Unoccupied Delay period increment. This will not count down as long as his movement is detected.

In an embodiment of the invention, the mode of operation remains largely the same as described above, however the determination of movement and/or presence in (for example) a room is significantly improved such that the system becomes more effective.

The PIR sensor in the remote sensing unit may be modified so as to provide a logic signal which denotes a large movement, and another logic signal that denotes a small movement, within the sensor's field of view. The large signal may therefore correspond to a person standing up, walking out of (or into) a room; and the small signal may correspond to the person nodding their head or waving their hand.

These signals govern the operation of the invention as follows. When a strong signal is detected, this will be treated as the starting point for the Unoccupied Delay period. Thereafter either a strong signal or a weak signal will reset the timer. If no such signal is detected for (say) twice the unoccupied delay then the "switch off signal is sent.

The practical differences and advantages of this modification may be appreciated best by way of some examples.

A user of the system, sat at home in front of a television (the television being powered by mains supply via a plug socket power strip - 2 - in accordance with the invention) may stand up to stretch his/her legs, then return to a relatively static seating position. This will have generated a large logic signal, beginning the unoccupied delay period (as illustrated in Figure 7). However, the user has not actually left the room and accordingly any relatively small movements (e.g. scratching chin, rolling or shaking head, waving hand etc.) will provide a small movement logic signal which prevents turn off of the television.

It will be noted that this embodiment represents an active determination of the user's presence in reaction to a large movement (which might be associated with leaving the room) rather than a passive determination of the lack of a user presence based on the absence of movement over a specified period within the room.

Had the user actually left the room, rather than simply sitting down again, there would be no subsequent weak or strong signal to reset the unoccupied delay period *unless they were to re-enter the room.* Accordingly the system will, as before, enter the shut down delay period and ultimately turn off the television. However, if the user was to re-enter the room, either during the unoccupied delay period or the shut down delay period, the system would reset.

Importantly, small movements will not start the unoccupied delay period, hence the need for two different logic states. The threshold levels for these states should therefore be selected so as to minimise the possibility that (for example) a user reaching out to pick up a glass of water or a remote control would trigger a logic signal relating to a large movement. Means to vary the sensitivity may be incorporated so as to tailor the system for various sizes of user - it will be appreciated that a large movement from a very small person or child may be equivalent (in terms of the signals generated by the PIR sensor) to a small movement of a much larger person. Similar adjustments may be required depending on the distance between the sensor and the likely location, in use, of the user relative thereto.

Also, means to switch between different modes of operation may be incorporated, for example a switch between a "sleep" mode (as described earlier where a lack of movement is determined) and a "presence" mode (where the large and small movement logic signals are employed).

It is also envisaged that as further developments are made in "presence detection" technology, elements thereof could be incorporated into the system without going beyond the intended scope of the invention.

In a further embodiment of the present invention, a user of the system has connected all of the electrical appliances in a room of his house to the plug socket power strip 2 as defined in this invention, and the appliances are switched on and functioning normally. When the user decides to leave the room, for example to retire to bed, he is able to press the reset button 6 found on the remote unit 5 of the system to interrupt the power supply to all of the electrical appliances connected to the system. The dual functionality of the reset button 6 on the system removes the requirement of the user to reach down behind the electrical appliances to switch each of them off at the wall mains supply. The user will be able to restore power to the system by pressing the same reset button 6 a second time.

In a yet further embodiment of the present invention, a user of the system has connected all of the electrical appliances in a room of his house to the plug socket power strip 2 as defined in this invention, and the appliances are switched on and functioning normally. When the user decides to leave the room, for example to retire to bed, he is able to interrupt the power supply to all of the electrical appliances connected to the system by way of a remote control device situated in another room of his house, such as the bedroom. The dual functionality of the remote control device also allows the user to have no requirement of reaching down behind the electrical appliances to switch each of them off at the wall mains supply. The user will be able to restore power to the system by utilising the same remote control a second time.

In a further embodiment, the remote control of the system 1 according to the present invention may be actuated via the World Wide Web.

In another embodiment, the system is adapted to communicate with a microprocessor or personal computer to enable activity to be monitored and the system thereby controlled. In this way when a premises is vacated, all appliances can be powered down, or have their power restored, from a remote location.

In a further embodiment, the system is integrated into the main power circuitry of the user's house or office building, and all electrical equipment in the building which is coupled to the mains power supply is under the control of the system. A remote control device is used to control which of the appliances should have power interrupted when no movement is detected, and which should not such as the refrigerator.

It is envisaged that a remote control of the present invention may comprise all of the necessary elements for control of the system, including sensors, "reset" and/or "cancel interrupt" switches, countdown timers and appropriate user interfaces such as LCD or OLED displays. The associated wall socket, power strip or mains circuit board can then comprise only the interrupt device (e.g. a relay) and a means for receiving a signal from the remote control to effect the interrupt. In the case of the mains circuit board, standard circuit breakers can be activated, and sockets or power strips may simply incorporate solid state relays or the like.

Further modifications and improvements will be apparent to the skilled person and may be added without departing from the scope of the invention as defined by the appended claims.

## Claims

1. An energy saving system, comprising:
at least one electrical power supply;
a motion sensor (4) which provides a means for detecting movement in a predetermined area; wherein the motion sensor is adapted to generate a first logic signal corresponding to a movement exceeding a first threshold within the predetermined area, and a second logic signal corresponding to a movement exceeding a second threshold within the predetermined area,
a means of communicating (34), said first or second logic signal between said motion sensor and said at least one electrical power supply;
a means for interrupting (24) the at least one electrical power supply after a predetermined time period;
an alert means (28, 10) that forewarns of the interruption of the electrical power supply; and
a means of resetting (6) the energy saving system to abort said interruption of the at least one electrical power supply before expiry of said predetermined time period;
**characterised in that**:
said first logic signal but not said second logic signal initiates the predetermined time period; and
a subsequent first logic signal or second logic signal resets the system to abort said interruption of the at least one electrical power supply.

2. An energy saving system as claimed in claim 1, wherein the electrical power supply is interrupted at the mains power supply.

3. An energy saving system as claimed in any preceding claim, wherein the motion sensor is a portable passive infrared sensor.

4. An energy saving system as claimed in any preceding claim, comprising a means of wireless communication to communicate the first or second logic signal between said motion sensor and said at least one electrical power supply.

5. An energy saving system as claimed in any preceding claim, wherein the means of resetting the system is also operable to interrupt a supply of electrical current to said at least one electrical power supply if actuated whilst electrical appliances connected to the system are supplied with said electrical current and are in use.

6. An energy saving system as claimed in any preceding claim, wherein the means to interrupt the electrical power supply comprises a means of wireless communication that receives the first or second logic signal.

7. An energy saving system as claimed in any preceding claim, wherein the alert means provides an audible signal.

8. An energy saving system as claimed in any preceding claim, wherein the alert means provides a visual signal.

9. An energy saving system as claimed in any preceding claim, wherein the means for interrupting the electrical power supply after a predetermined time period comprises a countdown timing mechanism.

10. An energy saving system as claimed in any preceding claim, including means for manually interrupting the electrical power supply at said at least one electrical power supply.

11. The system as claimed in any preceding claim, adapted to communicate with a microprocessor or personal computer to enable activity to be monitored and the system thereby controlled, and optionally linked to an alarm system so that if all linked appliances are powered down the system may activate an alarm system.

12. The system as claimed in any preceding claim, functionally integrated into the main or central circuitry of a building, which will thereby become under the control of the user of the system.

## Patentansprüche

1. Ein Energiesparsystem bestehend aus:
mindestens einer elektrischen Energieversorgung;
einem Bewegungsmelder (4), durch den Bewegungen in einem vorbestimmten Bereich erkannt werden;
wobei der Bewegungsmelder angepasst wird, um ein erstes logisches Signal entsprechend einer Bewegung, die einen ersten Grenzwert innerhalb eines vorbestimmten Bereiches überschreitet, und ein zweites logisches Signal entsprechend einer Bewegung, die einen zweiten Grenzwert innerhalb eines vorbestimmten Bereiches überschreitet, zu generieren,
einem Kommunikationsmittel (34), um das besagte erste oder zweite logische Signal zwischen dem besagten Bewegungsmelder und mindestens einer besagten elektrischen Energieversorgung zu kommunizieren;
einem Instrument zur Unterbrechung (24), um die besagte elektrische Energieversorgung, von der es mindestens eine gibt, nach einem vorbestimmten Zeitraum zu unterbrechen;
einer Alarmanlage (27,10), die die Unterbrechung der elektrischen Energieversorgung vorwarnt; und
einem Instrument zur Neueinstellung (6) des Energiesparsystems, um die besagte Unterbrechung einer elektrischen Energieversorgung vor Ablauf des besagten, vorbestimmten Zeitraums vorzeitig zu beenden;
**dadurch gekennzeichnet, dass**:
das besagte erste logische Signal, aber nicht das besagte zweite logische Signal, den vorbestimmten Zeitraum einleitet; und
ein folgendes erstes logisches Signal oder zweites logisches Signal das System zurücksetzt, um die besagte Unterbrechung einer elektrischen Energieversorgung zu unterbrechen.

2. Ein Energiesparsystem gemäß Anforderung 1, wobei die elektrische Energieversorgung bei der Netzstromversorgung unterbrochen wird.

3. Ein Energiesparsystem gemäß den vorherigen Anforderungen, wobei der Bewegungsmelder ein tragbarer Passiv-Infrarot-Sensor ist.

4. Ein Energiesparsystem gemäß den vorherigen Anforderungen, bestehend aus einem drahtlosen Kommunikationsmittel, um das erste oder zweite logische Signal zwischen dem besagten Bewegungsmelder und einer besagten elektrischen Energieversorgung.

5. Ein Energiesparsystem gemäß den vorherigen Anforderungen, wobei das Instrument zur Neueinstellung auch betriebsbereit ist, um den elektrischen Strom einer besagten elektrischen Energieversorgung bei Aktivierung zu unterbrechen, während die an das System angeschlossenen elektrischen Geräte mit dem besagten elektrischen Strom versorgt werden und in Betrieb sind.

6. Ein Energiesparsystem gemäß den vorherigen Anforderungen, wobei das Instrument zur Unterbrechung der elektrischen Energieversorgung aus einem drahtlosen Kommunikationsmittel besteht, dass das erste oder zweite logische Signal empfängt.

7. Ein Energiesparsystem gemäß den vorherigen Anforderungen, wobei das Alarmsystem ein hörbares Signal aussendet.

8. Ein Energiesparsystem gemäß den vorherigen Anforderungen, wobei das Alarmsystem ein visuelles Signal aussendet.

9. Ein Energiesparsystem gemäß den vorherigen Anforderungen, wobei das Instrument zur Unterbrechung der elektrischen Energieversorgung nach einem vorbestimmten Zeitraum aus einem Countdown-Mechanismus besteht.

10. Ein Energiesparsystem gemäß den vorherigen Anforderungen, einschließlich eines Mittels zur manuellen Unterbrechung der elektrischen Energieversorgung an einer besagten elektrischen Energieversorgung.

11. Das System gemäß den vorherigen Anforderungen, angepasst, um mit einem Mikroprozessor oder Personal Computer zu kommunizieren, um die zu überwachende Aktivität zu aktivieren und um dadurch das System zu steuern, und optional mit einem Alarmsystem verbunden, so dass, wenn alle verbundenen Geräte abgeschaltet werden, das System ein Alarmsystem aktivieren kann.

12. Das System gemäß den vorherigen Anforderungen, funktional in einen Haupt- oder Zentralschaltkreis eines Gebäudes integriert, der dadurch unter der Kontrolle de Benutzers des Systems steht.

## Revendications

1. Un système économiseur d'énergie, comprenant :
au minimum une alimentation électrique ;
un capteur de mouvement (4) permettant de détecteur les mouvements dans une zone prédéterminée ;
dans lequel le capteur de mouvement est adapté pour émettre un premier signal logique correspondant à un mouvement dépassant un premier seuil au sein de la zone prédéterminée, et un deuxième signal logique correspondant à un mouvement dépassant un deuxième seuil au sein de la zone prédéterminée,
un dispositif de communication (34) dudit premier ou deuxième signal logique entre ledit capteur de mouvement et ladite alimentation électrique ;
un dispositif d'interruption (24) de l'alimentation électrique au bout d'une certaine période prédéterminée ;
un dispositif d'alerte (27,10) émettant un avertissement de la coupure de courant ; et
un dispositif de réarmement (6) du système économiseur d'énergie permettant d'interrompre ladite coupure de courant de l'alimentation électrique avant l'expiration de ladite période prédéterminée ;
**caractérisé par le fait que** :
ledit premier signal logique, mais non pas ledit deuxième signal logique, déclenche la période prédéterminée ; et
un premier ou un deuxième signal logique ultérieur réarme le système pour interrompre ladite coupure de ladite alimentation électrique.

2. Un système économiseur d'énergie selon la revendication 1, dans lequel l'alimentation électrique est coupée à alimentation secteur.

3. Un système économiseur d'énergie selon une quelconque des revendications précédentes dans lequel le capteur de mouvement est un capteur infrarouge passif portable.

4. Un système économiseur d'énergie selon une quelconque des revendications précédentes comprenant un dispositif de télécommunications sans fil permettant de communiquer le premier ou le second signal logique entre ledit capteur de mouvement et ladite alimentation électrique.

5. Un système économiseur d'énergie selon une quelconque des revendications précédentes dans lequel le dispositif de réarmement du système peut également être utilisé pour couper un courant électrique à au moins une alimentation électrique en cas d'activation pendant que des appareils électriques branchés sur le système sont alimentés par ledit courant électrique et sont en service.

6. Un système économiseur d'énergie selon une quelconque des revendications précédentes dans lequel le dispositif de coupure de l'alimentation électrique comprend un dispositif de communication sans fil recevant le premier ou le deuxième signal logique.

7. Un système économiseur d'énergie selon une quelconque des revendications précédentes dans lequel le dispositif d'alerte émet un signal sonore.

8. Un système économiseur d'énergie selon une quelconque des revendications précédentes dans lequel le dispositif d'alerte émet un signal visuel.

9. Un système économiseur d'énergie selon une quelconque des revendications précédentes dans lequel le dispositif de coupure de l'alimentation électrique au bout d'une certaine période prédéterminée comprend une minuterie avec compte à rebours.

10. Un système économiseur d'énergie selon une quelconque des revendications précédentes comprenant un dispositif de coupure manuelle du courant électrique à ladite alimentation électrique.

11. Le système selon une quelconque des revendications précédentes adapté pour communiquer avec un microprocesseur ou un ordinateur personnel afin de permettre le contrôle de l'activité et la commande du système, et relié en option à un système d'alarme, de sorte qu'en cas de désactivation de tous les appareils reliés, le système puisse activer un système d'alarme.

12. Le système selon une quelconque des revendications précédentes, intégré fonctionnellement dans les circuits principaux ou centraux d'un bâtiment, qui sont alors placés sous le contrôle de l'utilisateur du système.
